# FASCICULE DE BREVET EUROPEEN

(11) **EP 3 297 863 B1**
(45) Date de publication et mention de la délivrance du brevet: **04.05.2022**
(21) Numéro de dépôt: 16713534.2
(22) Date de dépôt: 02.03.2016
(51) Int. Cl.: B60K 6/48, B60K 6/547, B60K 6/36, F16H 3/00

(54) **TRANSMISSION HYBRIDE A DOUBLE COUPLAGE D'ARBRES ET PROCÉDÉ DE COMMANDE DE CHANGEMENTS DE RAPPORTS**
HYBRIDGETRIEBE MIT DOPPELWELLENKUPPUNG UND VERFAHREN ZUR GANGSCHALTUNGSSTEUERUNG
HYBRID TRANSMISSION HAVING DUAL SHAFT COUPLING, AND METHOD FOR CONTROLLING GEAR CHANGES

(30) Priorité: 22.05.2015 FR 1554651
(43) Date de publication de la demande: 28.03.2018
(73) Titulaire: Renault s.a.s, 92100 Boulogne Billancourt (FR)
(72) Inventeur: VIGNON, Antoine, 91430 Igny (FR); FREMAU, Nicolas, 78470 Saint Remy Les Chevreuse (FR); KETFI-CHERIF, Ahmed, 78990 Elancourt (FR)
(74) Mandataire: Renault Group
(86) Numéro de dépôt international: PCT/FR2016/050465
(87) Numéro de publication internationale: WO 2016/189211

(56) Documents cités:
- DE-A1-102010 028 079
- DE-A1-102011 077 594
- US-A1- 2010 120 580

## Description

La présente invention se rapporte au domaine des transmissions hybrides pour véhicules automobiles, comportant un moteur thermique d'entraînement, et au moins une machine électrique.

Plus précisément, elle a pour objet une transmission hybride pour véhicule automobile selon la revendication 1, muni d'un moteur thermique et d'au moins une machine électrique d'entraînement, deux arbres primaires coaxiaux dont l'un est plein et l'autre est creux, reliés respectivement au vilebrequin du moteur thermique et à une machine électrique, un arbre secondaire relié aux roues du véhicule par un différentiel, et un arbre de transfert de mouvement d'un arbre primaire sur l'arbre secondaire et de couplage des arbres primaires, dans laquelle la machine électrique est disposé à la même extrémité des arbres primaires et dans laquelle l'arbre primaire creux porte une denture fixe, assurant le passage permanent du mouvement sur l'arbre de transfert.

L'invention a également pour objet un procédé de commande des changements de rapports selon la revendication 11.

Les transmissions hybrides ont pour intérêt principal de faire bénéficier la chaîne cinématique d'entraînement d'un véhicule, de deux sources d'énergies, thermique et électrique, dont les apports de couple peuvent se cumuler dans des modes hybrides, ou être utilisées séparément, soit dans un « mode thermique pur », où la machine électrique ne fournit pas de couple à la chaîne de traction, soit dans un mode « électrique pur », où le moteur thermique ne fournit pas de couple à la chaîne de traction. D'autres fonctionnalités sont également requises, telles que la possibilité de lancer le moteur thermique à l'arrêt ou en roulage, en utilisant la machine électrique comme démarreur, ou celle d'utiliser la machine électrique en générateur de courant pour charger les batteries.

Par la publication DE 10 2011 077594, on connaît une transmission hybride comportant deux arbres primaires alignés, se faisant face de part et d'autre d'un embrayage central. Ces deux arbres sont reliés respectivement au moteur thermique et à la machine électrique. Un deuxième embrayage de coupure est disposé entre le moteur thermique et la transmission. La transmission comporte un arbre secondaire relié au différentiel et un arbre de transfert assurant le couplage des deux arbres primaires, et un renvoi de mouvement sur l'arbre secondaire. Cette transmission permet de nombreuses combinaisons de mouvements, dans les modes thermique et électrique et dans les modes hybrides.

Toutefois, elle présente un important encombrement en longueur, en raison de l'empilement des arbres, des pignons et des embrayages sur la ligne primaire.

La publication DE 10 2010 028 079, décrit une autre transmission, comportant un embrayage d'entrée qui permet d'interrompre le couple entre le moteur et la boîte.

La présente invention vise à réaliser une transmission hybride plus compacte que les précédentes dans ses deux dimensions, tout en disposant d'une plus grande flexibilité sur l'usage du moteur thermique et de la machine électrique, grâce à l'indépendance totale de deux démultiplications.

Dans ce but, elle prévoit que les arbres primaires soient reliés au moteur thermique et à la machine électrique sans embrayage de coupure, et que l'arbre primaire creux porte pignons fixes de rapports électriques engrenant avec des pignons fous de l'arbre secondaire.

Les arbres primaires sont alors reliés sans embrayage de coupure, au moteur thermique et à la machine électrique.

Dans un mode de réalisation préféré de l'invention, les deux arbres primaires sont respectivement un arbre primaire plein relié au vilebrequin du moteur thermique et un arbre primaire creux relié à la machine électrique, qui tourne autour de l'arbre primaire plein.

Les trois dispositifs de couplage peuvent être commandés par un groupe de passage électrique à trois positions, et par un groupe fonctionnel de passage thermique à cinq positions.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1 illustre un premier mode de réalisation de l'invention,
- la figure 2 illustre un deuxième mode de réalisation de l'invention,
- la figure 3 est un tableau de fonctionnement correspondant au premier mode de réalisation,
- la figure 4 est un tableau de fonctionnement correspondant au deuxième mode de réalisation,
- les figures 5 à 7 illustrent trois exemples de séquences d'accélération,
- les figures 8A, 8B et 8C illustrent un passage de rapports en mode électrique avec compensation par la deuxième machine électrique,
- les figures 9A et 9B illustrent le fonctionnement de la transmission en mode hybride série, et
- les figures 10A et 10B mettent en évidence la réduction du masque de la transmission obtenue par l'invention.

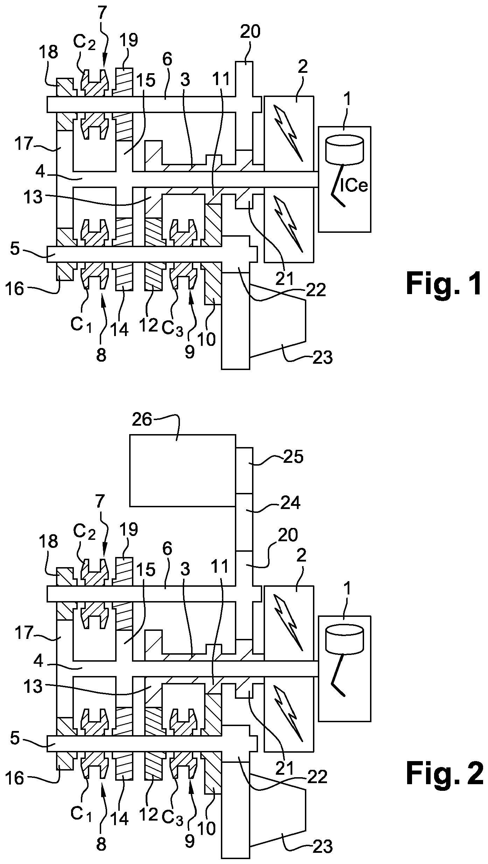

La transmission hybride de la figure 1 pour véhicule automobile muni d'un moteur thermique 1 et d'une machine électrique de traction 2, comprend deux arbres primaires 4, 3 concentriques, reliés au vilebrequin du moteur thermique 1 (*Ice*) et à la machine électrique 2, sans embrayage de coupure. Dans le mode de réalisation non limitatif de l'invention décrit sur les figures, les arbres primaires sont respectivement un arbre primaire plein 4 relié au vilebrequin du moteur thermique sans embrayage de coupure et un arbre primaire creux 3 relié directement à la machine électrique 2, et tournant autour de l'arbre primaire plein.

La transmission comprend un arbre secondaire 5 relié aux roues du véhicule par un différentiel 23, et un arbre de transfert 6 de mouvement d'un arbre primaire 3 sur l'arbre secondaire 5, et de couplage des arbres primaires. L'arbre primaire plein 4 est connecté directement par l'intermédiaire d'un système de filtration (moyeu amortisseur, « damper », double volant ou autre), au nez du vilebrequin du moteur thermique 1 (*Ice*)*.* L'arbre primaire creux 3 est relié directement à la machine électrique 2, qui est disposée à la même extrémité des arbres primaires 4, 3, que le moteur thermique 1. L'arbre secondaire 5 porte un pignon 22 d'attaque du différentiel 23. L'arbre de transfert 6 est lié en permanence à l'arbre primaire creux 3 par un pignon fixe 21. Il porte une denture fixe 20 engrenant avec une denture fixe 21 du premier arbre primaire 4, et deux pignons fous 18, 19, engrenant respectivement avec les pignons fixes 17, 15 de l'arbre primaire plein 4. L'arbre de transfert 6 renvoie le mouvement du primaire creux 3 sur l'arbre secondaire 5 sur certains rapports de transmission, mais n'attaque pas directement le différentiel, car la transmission ne dispose que du seul pignon d'attaque de différentiel 22, porté par l'arbre secondaire 5, cité plus haut. Le pignon d'attaque 22 est situé dans le même plan transversal que l'engrènement de pignons 20, 21, de l'arbre de transfert 6 sur l'arbre primaire creux 3. L'arbre primaire creux 3 porte en plus deux pignons fixes électriques 11, 13 de rapports électriques *ev1* et *ev2,* engrenant avec les deux pignons fous électriques 10 et 12 de l'arbre secondaire 5. Les pignons fixes de rapports thermiques directs ***IceA*** et ***IceB*** 15, 17 sont portés par l'arbre primaire plein 4, et engrènent avec deux pignons fous de rapports thermiques 14, 16 de l'arbre secondaire 5. Les deux pignons fixes 15, 17 de l'arbre primaire plein 4 engrènent aussi avec deux pignons fous de couplage 19, 18 de l'arbre de transfert 6. En résumé, l'arbre secondaire porte deux pignons fous 11, 13 de rapports électriques, deux pignons fous de rapports thermiques 14, 16, et le pignon d'attaque de différentiel 22.

La transmission comprend trois dispositifs de couplage 8 (C1), 7 (C2) et 9 (C3). Le premier dispositif de couplage 8 (C1) est porté par l'arbre secondaire 5. Il permet de coupler l'arbre primaire 4 relié au moteur thermique, avec l'arbre secondaire 5, sur deux rapports thermiques distincts, ***IceA*** et ***IceB.*** Le deuxième dispositif de couplage 7 (C2) est porté par l'arbre de transfert 6. Il permet de coupler entre eux les deux arbres primaires 4, 3, avec deux rapports de démultiplication différents. Le troisième dispositif de couplage 9 (C3) est porté par l'arbre secondaire 5. Il permet de coupler l'arbre primaire 3 relié à la machine électrique 2, avec l'arbre secondaire 5, sur deux rapports de démultiplication différents.

Dans le mode de réalisation illustré par la figure 2, on retrouve les mêmes éléments que sur la figure 1, dans la même disposition. La transmission comprend en plus une deuxième machine électrique 26 (HSG), couplée à l'arbre de transfert 6. Son pignon de sortie de mouvement 25 entraîne un pignon intermédiaire de renvoi 24 sur le pignon de couplage 20 de l'arbre de transfert 6 sur le pignon 21 de l'arbre primaire creux 3.

Dans les deux modes décrits, la transmission présente deux engrenages triples 18, 17, 16 et 19, 15, 14 entre un pignon fou 18, 19 de l'arbre de transfert 6, une denture fixe 17, 15 de l'arbre primaire plein 4, et un pignon fou 16, 14 de l'arbre secondaire 5.

Les moyens de couplage C1, C2, C3 peuvent être de tout type : crabot, synchroniseur, embrayage humide ou autres. La machine électrique peut aussi être de tout type : machine à aimants, asynchrone ou à réluctance, dans tout type de disposition radiale (rotor intérieur ou rotor extérieur) ou axiale, avec un refroidissement par eau, air ou huile. Le volant amortisseur (s'il y en a un) peut aussi être de tout type, et on peut utiliser notamment une filtration à grands ressorts courbes, mono-pente ou bipente. Comme la première, la deuxième machine électrique 26 (*HSG*) peut être de tout type. Elle peut être montée sur la transmission dans une disposition de type « *add on* ». Avec sa descente, elle constitue alors un ensemble rapporté sur le carter de la transmission, ou intégré à l'intérieur de celle -ci, de type *« add in ».*

Dans les deux modes décrits :
- le premier arbre primaire 3 est creux ; il porte une denture fixe 21, assurant le passage permanent du mouvement sur l'arbre de transfert 6, et deux dentures fixes 11, 13 de rapports électriques engrenant avec des pignons fous 10, 12, de l'arbre secondaire 5 ;
- le deuxième arbre primaire 4 est plein ; il porte deux dentures fixes 11, 13, de rapports thermique, engrenant avec deux pignons fous 10, 14 de l'arbre secondaire 5 ;
- l'arbre secondaire 5 porte les deux pignons fous 10 et 12 des rapports électriques *ev1* et *ev2,* deux pignons fous de rapports thermiques directs 14, 16, et le pignon d'attaque de différentiel 22 ;
- l'arbre de transfert 6 porte une denture fixe 20 engrenant avec la denture le pignon intermédiaire de renvoi 24 sur l'arbre primaire creux 3, et deux pignons fous 18, 19, engrenant respectivement avec les deux dentures fixes 17, 15 de l'arbre primaire plein 3.

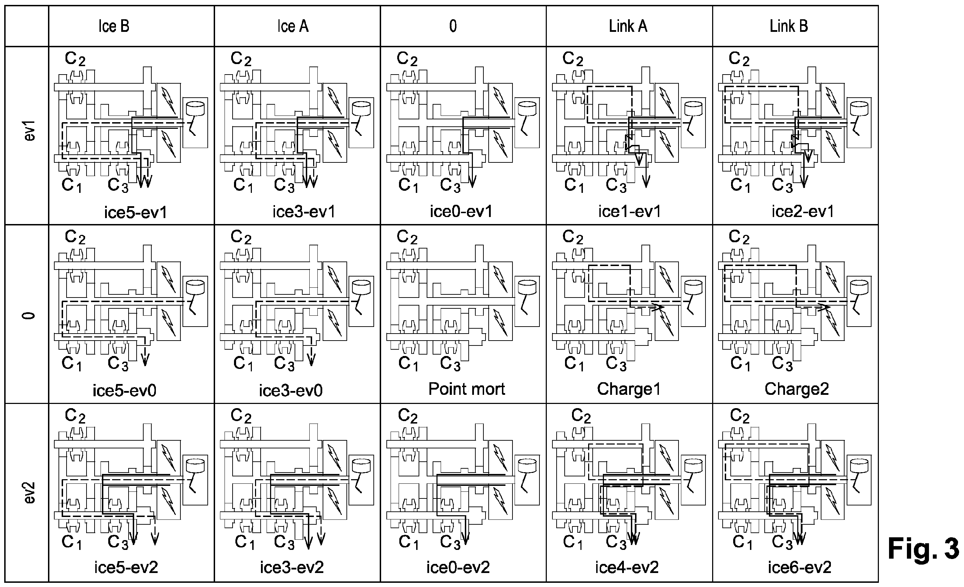

Chacun des trois dispositifs de couplage C1, C2, C3 dispose de trois positions, dont différentes combinaisons sont présentées sur la figure 3. Cette figure fait état de six rapports thermiques ***Ice1*** à ***Ice6.*** On a donc six rapports thermiques ***Ice1*** à ***Ice6*** étagés (dont le dernier ***Ice6,*** n'est pas forcément exploité, pour des raisons mécaniques et de performances) :
- le ratio du premier rapport thermique ***Ice1*** est égal au ratio de couplage des arbres primaires sur l'arbre de transfert multiplié par le ratio ***linkA*** de retour sur le primaire avec le coupleur C2 à droite, et par le ratio du rapport électrique ***ev1***;
- le ratio du deuxième rapport thermique ***Ice2*** est égal au ratio de couplage des arbres primaires sur l'arbre de transfert multiplié par le ratio ***linkB*** de retour sur le primaire avec le coupleur C2 à gauche, et par le ratio du rapport électrique ***ev1***;
- le ratio du quatrième rapport thermique ***Ice4*** est égal à au ratio de couplage des arbres primaires sur l'arbre de transfert multiplié par le ratio ***linkA*** de retour sur le primaire avec le coupleur C2 à droite, et par le ratio du rapport électrique ***ev2** ;*
- le ratio du sixième rapport thermique ***Ice6*** est égal au ratio de couplage des arbres primaires sur l'arbre de transfert multiplié par le ratio ***linkB*** de retour sur le primaire avec le coupleur C2 à gauche, et par le ratio du rapport électrique ***ev2** ;*
- le troisième rapport thermique ***Ice3*** correspond à l'un des deux rapports thermiques directs ***IceA*** mentionnés plus haut ;
- le cinquième rapport thermique ***Ice5*** est l'autre rapport thermique direct ***IcB** ;*

La figure 3 mentionne 15 positions de fonctionnement privilégiées :
- ***Ice0*** (neutre), pour le découplage du moteur thermique, avec la machine électrique à l'arrêt ***point-mort***, ou fournissant du couple aux roues sur les rapports électriques ***Ice0-ev1*** ou ***Ice0-ev2**;*
- ***Ice3-ev0***, ***Ice3-ev1***, ***Ice3-ev2*** pour le troisième rapport thermique ***Ice3 = IceB,*** seul, ou avec un couple électrique fourni sur le rapport ***ev1*** ou ***ev2***,
- ***Ice5***, ***Ice5-ev1***, ***Ice5-ev2*** pour le cinquième rapport thermique ***Ice5 = IceB,*** seul, ou avec un couple électrique fourni sur le rapport électrique ***ev1*** ou ***ev2***;
- ***Charge1*** (recharge de batterie par la machine électrique fonctionnant en générateur) avec le coupleur C2 à droite ***(linkA)***,
- ***Charge 2*** (recharge de batterie par la machine électrique fonctionnant en générateur) avec le coupleur C2 à gauche *(linkB),*
- ***Ice1-ev1*** en position de couplage ***linkA*** du coupleur ***C2*** et le coupleur C3 *à* droite,
- ***Ice4-ev2*** en position de couplage ***linkA*** du coupleur ***C2*** et le coupleur C3 à droite,
- ***Ice2-ev1*** en position de couplage ***linkB*** du coupleur ***C2*** et le coupleur ***C3** à* gauche,
- ***Ice6-ev2*** en position de couplage ***linkB*** du coupleur ***C2*** et le coupleur ***C3** à* gauche,

En résumé, le dispositif de couplage 8 (***C1***) des arbres primaires 4, 3, dispose de trois positions donnant :
- au centre le neutre, la charge, ou des hybrides avec apport du couple thermique par transfert sur l'arbre 6, ou
- à gauche et à droite les deux rapports thermiques directs ***IceA*** et ***IceB*** avec ou sans l'appoint de la machine électrique sur l'un de ses deux rapports ***ev1***, ***ev2*** (modes hybrides).

Le dispositif premier dispositif de de couplage 7 (***C2***) de l'arbre de transfert peut occuper trois positions dans lesquelles :
- l'arbre de transfert 6 est découplé de l'arbre secondaire 5 **(*Point-mort, IcA, IcB*** avec ou sans l'appoint de la machine électrique),
- l'arbre de transfert assure le transfert du mouvement du moteur thermique sur l'arbre secondaire 5 dans des combinaisons hybrides ***Ice1-ev1, ice2-Ev2, Ice4-Ev2, Ice6-Ev2),*** ou pour charger la batterie.

Le deuxième dispositif de couplage 9 (***C3***) de l'arbre secondaire peut occuper trois positions dans :
- une position dans laquelle l'arbre primaire 4, relié à la machine électrique 8, est découplé de l'arbre secondaire 5, au point mort ou dans des modes purement électriques, et
- deux positions dans lesquelles l'arbre primaire 4 relié à la machine électrique 7, est couplé directement à l'arbre secondaire 5 ***(point mort, Ic0-ev1*** ou ***Ic0-ev2***).

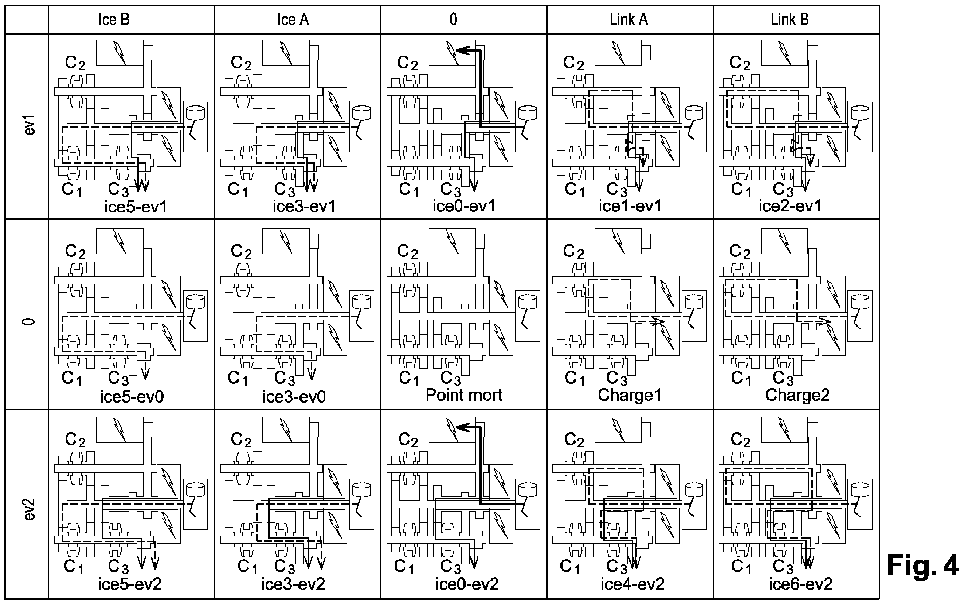

La figure 4, correspondant au deuxième mode de réalisation, se lit comme la figure 3, avec, en plus, l'apport de la deuxième machine électrique appelée HSG, pour « *High Voltage Start Generator ».* Tous les rapports de la figure 3 sont accessibles en fonctionnement hybride parallèle, avec son appoint de puissance sur l'arbre primaire creux 3. En utilisant la deuxième machine électrique *HSG* comme générateur en roulage, on dispose de deux modes hybrides série, selon la position du coupleur ***C3**.*

Conformément aux figures 3 et 4, le fonctionnement de la transmission peut être limité à cinq des 3 × 3 combinaisons de position des dispositifs de couplage C1 et C2 de l'arbre secondaire et de primaire et de l'arbre de transfert. Les combinaisons retenues permettent de bénéficier des six démultiplications thermiques ***Ice1*** à ***Ice6***, dont deux en couplage direct des arbres primaires et quatre en couplage par transfert. Pour éviter un blocage de la transmission occasionné par l'engagement intempestif de deux rapports thermiques, on peut commander ces deux dispositifs par un système de sélection / passage classique de boîte manuelle, où l'on sélectionne une ligne de passage avant d'engager un rapport sur celle-ci. Pour engager l'ensemble des rapports illustrés par la matrice à 15 positions des figures 3 et 4, et opérer tous les changements de rapports nécessaires au bon fonctionnement de la transmission, les trois dispositifs de couplage ***C1***, ***C2***, ***C3*** sont avantageusement commandés par un groupe de passage électrique à trois positions, et un groupe fonctionnel de passage thermique à cinq positions. Les deux coupleurs ***C1*** (8), ***C2*** (7), qui commandent la sortie de mouvement du moteur thermique sont de préférence équipés d'un actionneur de type passage-sélection, interdisant l'engagement simultané de deux rapports thermiques.

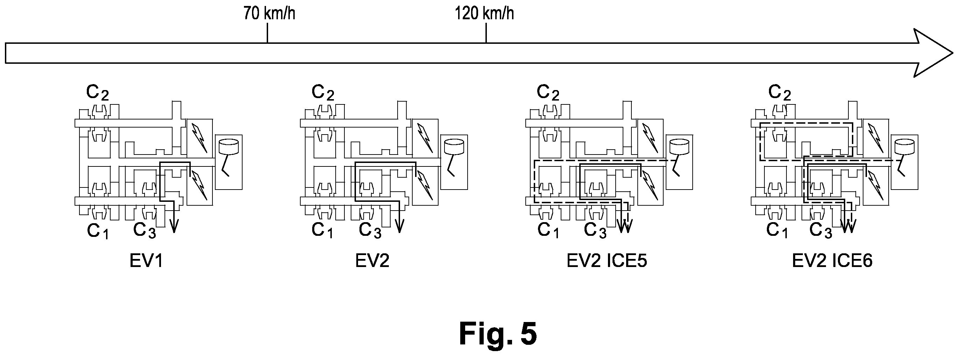

La figure 5 illustre une séquence d'accélération minimisant le roulage électrique, convenant notamment pour un mode d'utilisation dit « *de semaine* », avec la possibilité de recharger les batteries entre plusieurs trajets. Le véhicule est lancé sur le rapport électrique ***ev1***. Le passage sur le rapport électrique ***ev2***, effectué par exemple autour de 70 km/h, se fait en rupture de couple avec la séquence suivante : annulation du couple électrique, décrabotage, du pignon fou 12 de ***ev1***, synchronisation de la machine électrique à vide pour que le pignon fou 12 de ***ev2*** atteigne la vitesse du secondaire 5, puis crabotage du rapport ***ev2*** et remise en couple.

On peut passer ensuite le rapport ***ev2-Ice5*** : la traction est maintenue par la machine électrique sur le rapport ***ev2***, le moteur thermique est démarré (à l'aide d'un dispositif de démarrage propre), puis synchronisé à vide jusqu'au régime du pignon fou 14 du rapport ***Ice5*** ; le moteur thermique *Ice* est craboté, puis le niveau de couple entre celui-ci et la machine électrique 2, est ajusté. Pour optimiser la consommation et éviter les pertes d'entraînement de la machine électrique, la machine électrique peut être déconnectée et arrêtée. Elle peut toutefois être reconnectée pour faire de la régénération ou ajouter du couple (« *boost* ») en accélération. La séquence maximise le roulage électrique. En fonction de la demande de puissance moyenne, il est possible de rester sur ***ev2-Ice5*** (pour avoir de fortes accélérations ou rouler en pente par exemple), ou de passer sur ***ev2-Ice6,*** qui convient mieux pour un roulage stabilisé sur terrain plat, ou de faibles pentes.

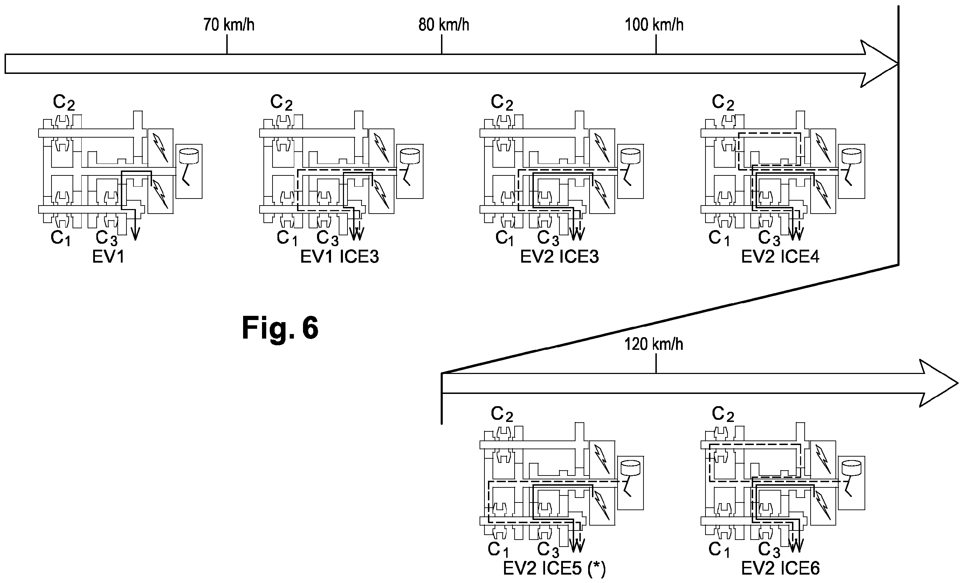

La figure 6 montre une autre séquence d'utilisation, avec un roulage électrique, puis hybride sur différents rapports successifs, sans rupture de couple lors des passages. On peut qualifier ce mode d'utilisation de « *mode week-end confort ».* Le véhicule est lancé sur le rapport électrique ***ev1***, par jusqu'à environ 70 km/h. Le moteur thermique est démarré, puis lancé à vide jusqu'au régime du pignon fou 14 du rapport ***Ice3.*** Le moteur thermique est craboté, puis le niveau de couple entre celui-ci et la machine électrique 2 est ajusté. On effectue ensuite un passage du rapport ***ev1-Ice3*** sur le rapport ***Ev2-Ice3,*** par exemple autour de 80 km/h, en annulant le couple électrique avant de dé-craboter le pignon 10, de synchroniser à vide la machine électrique pour qu'elle atteigne le régime du rapport ***ev2***, et de craboter le pignon 12. A partir de 100 km/h, on peut faire un passage de ***ev2-Ice3*** sur **ev2-*Ice4*** en maintenant la traction électrique sur le rapport ev2. Le couple du moteur thermique est annulé, puis reporté sur ev2. Le moteur thermique est freiné et décélère (avec ou sans dispositifs complémentaires de frottement). Quand le régime du pignon fou 19 de ***Ice4*** est atteint, le moteur thermique *Ice* est craboté. Le couple est de nouveau réparti entre le moteur thermique et la machine électrique 2. De manière analogue, on peut passer de ***ev2-Ice4*** à ***ev2-Ice5*** au-dessus de 100kmh, puis de ***ev2-Ice5** à **ev2-Ice6*** au-dessus de 120 km/h.

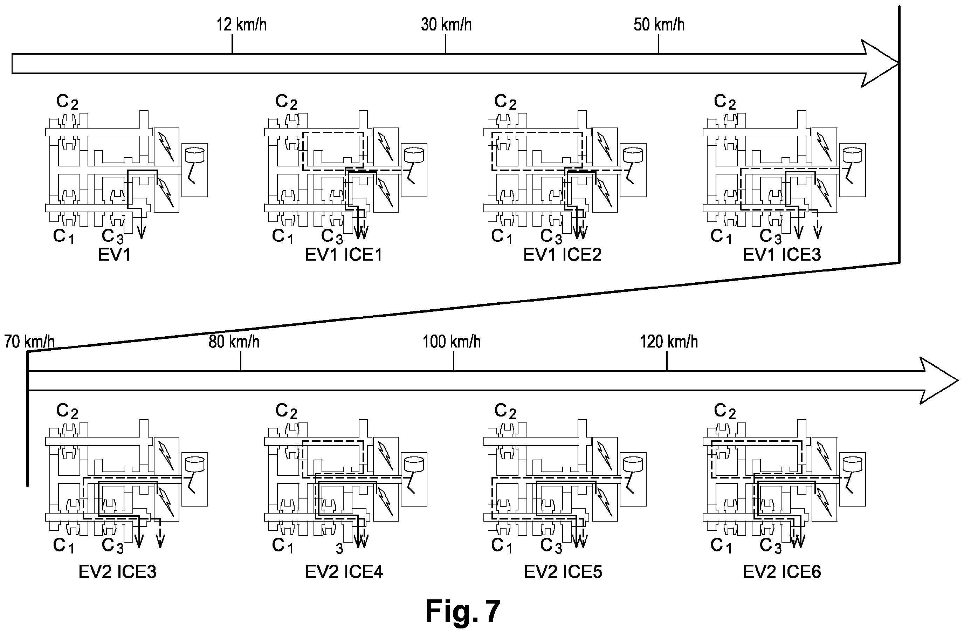

La figure 7 propose un autre mode d'utilisation dit « *week-end typique* » utilisant tous les ratios de la transmission. Le véhicule est toujours lancé sur le rapport électrique ***ev1*.** A environ 12 km/h, le moteur thermique est lancé sur le rapport ***Ice1.*** Vers 30km/h, on change de rapport thermique pour passer successivement de ***ev1-Ice1*** à ***ev1-Ice2***, de ***ev1-Ice2** à **ev1-Ice3*** au-dessus de 50 km/h, de 30 e***v1-Ice3*** à ***ev2-Ice3*** au-dessus de 70km/h, de ***ev2-Ice3** à **ev2Ice4*** au-dessus de 80km/h, puis de ***ev2-Ice4*** à ***ev2-ICE5*** au-dessus de 100km/h, et enfin de ***ev2-Ice5** à **ev2-Ice6*** au-dessus de 120 km/h. Dans cet enchainement, les couples électrique et thermique ne transitent pas par le même pignon de la ligne primaire. Il est ainsi possible de transmettre à la roue la totalité des couples électrique et thermique, sans limitation.

La présence d'une deuxième machine électrique permet d'ajouter à la transmission un grand nombre de fonctionnalités. Le démarrage du moteur thermique peut être plus silencieux et plus rapide, sans bruit de démarreur. La rapidité du démarrage est essentielle pour l'agrément de la conduite, notamment pour disposer d'un surcroit de puissance lors des dépassements. Cette rapidité permet également de le déconnecter dès qu'il n'est plus utile à la traction. On peut donc gagner sur la consommation, notamment par suppression du frein moteur en décélération, en maximisant la puissance de régénération de la machine électrique. On peut encore assurer le maintien de faibles charges avec la machine électrique seule, sans frein moteur, dans une fonction dite de « *sailing ».*

La deuxième machine électrique 26 permet également d'améliorer les changements de rapport grâce à leur synchronisation électrique, dite « *e-synchronisation* ». Comme le pilotage en couple d'une machine électrique est plus rapide et plus précis que celui d'un moteur thermique, l'ajout d'une seconde machine électrique en prise directe, permet un pilotage plus fin du moteur thermique à vide lors des passages. Concrètement, on réduit les temps de passage et les chocs de crabotage. En particulier il est possible de récupérer l'énergie cinétique emmagasinée par le volant d'inertie du moteur thermique, lors des passages d'un rapport court sur un rapport plus long, où il faut décélérer le moteur thermique.

L'ajout de la deuxième machine électrique 26 permet aussi de réaliser sous couple, les changements de rapports électriques, sans faire démarrer le moteur thermique (sans combustion, donc en mode électrique), mais en l'entraînant à vide. Les changements de rapports électriques, de ***ev1*** à ***ev2*** et inversement, s'effectuent sous couple, en faisant tourner le moteur thermique sans lui injecter de carburant.

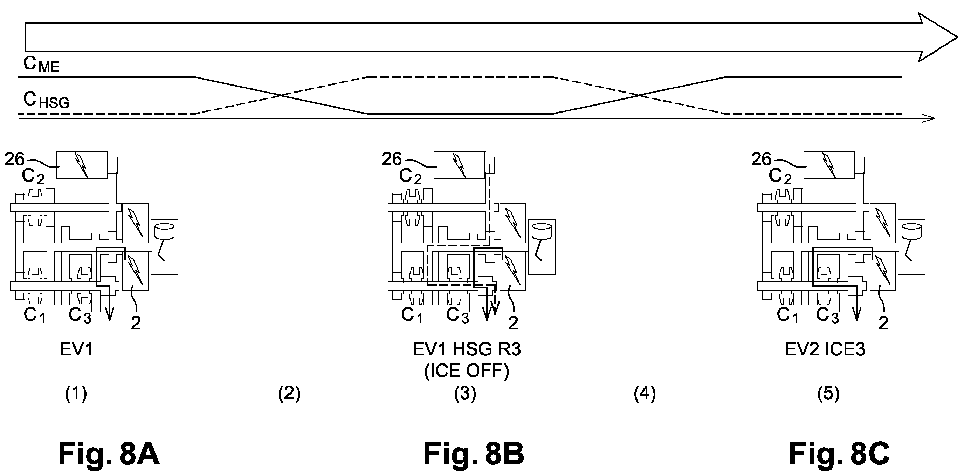

L'enchaînement des figures 8A, 8B, 8C à partir du premier rapport ***ev1***, établi par la première machine électrique 2 (étape 1), est le suivant :
a) synchronisation de la deuxième machine électrique 26 (HSG) au régime du pignon fou 12 du deuxième rapport électrique ***ev2***, par l'intermédiaire du moteur thermique, sans injection de carburant, et crabotage de la deuxième machine électrique 26 (étape 2),
b) fourniture de couple (*C_{HSG}*) par la deuxième machine électrique 26, et dé-crabotage du rapport ***ev1*** (étape 3),
c) synchronisation de la première machine électrique (ME) 2 et fourniture de couple (*C_{ME}*) par celle-ci sur le deuxième rapport ***ev2*** (étape 4),
d) déconnection de la deuxième machine électrique 29.

Le couple est transféré temporairement d'une machine sur l'autre entre les étapes 2 et 4. Le niveau de puissance de compensation de la deuxième machine électrique est déduit de la trainée d'entraînement à vide du moteur thermique. Le passage rétro de ***ev1*** sur ***ev2*** en pied à fond (« *kick down* ») ou en pied levé, s'effectue sous couple dans les mêmes conditions, avec maintien du frein moteur dans ce dernier cas.

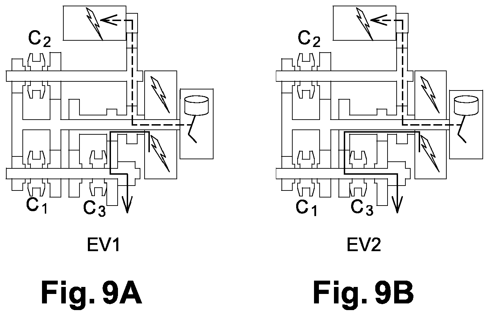

Comme indiqué plus haut, la transmission dispose avec ses deux machines électriques, de modes hybrides séries : ***Hybride série ev1*** et ***hybride série ev2***, illustrés par les figures 9A et 9B. Ils sont particulièrement bien adaptés en consommation et en agrément, aux faibles charges et aux faibles vitesses, par exemple en usage urbain ou en embouteillage. Ces modes présentent également un intérêt, pour réchauffer le catalyseur à un niveau de charge optimum et indépendant de la traction. On peut ainsi réduire les émissions, tout en stockant dans la batterie, l'énergie produite.

Les avantages et les possibilités d'utilisation de la transmission hybride proposée par l'invention sont nombreux. Sa longueur est réduite par rapport aux transmissions hybrides connues, en particulier parce que l'arbre secondaire porte un pignon d'attaque de différentiel situé dans le même plan transversal qu'un engrènement de l'arbre de transfert sur l'arbre secondaire. La disposition concentrique des arbres primaires et l'absence d'embrayage de coupure contribuent également au raccourcissement de la transmission.

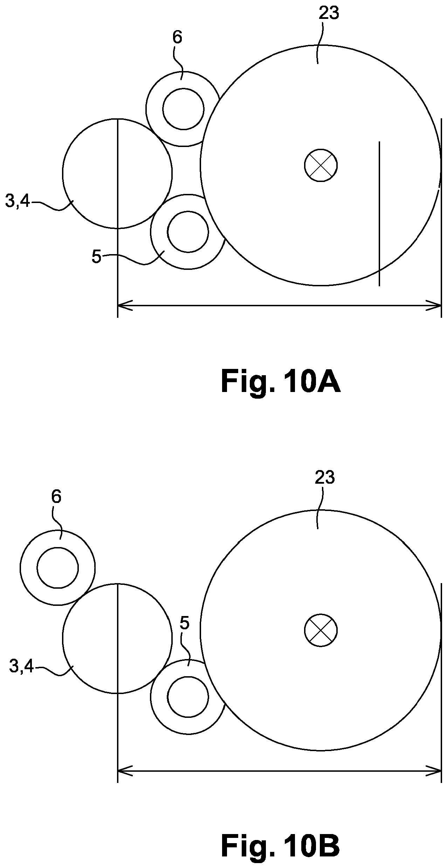

Par ailleurs, le fait que la transmission n'ait qu'un seul pignon d'attaque sur la couronne de différentiel permet d'adopter une couronne de différentiel de petit diamètre. Les figures 10A et 10B mettent en évidence la réduction du masque par rapport à une transmission hybride connue (figure 10A) comportant deux arbres secondaires 5, 5' qui attaquent tous les deux le différentiel 7. Avec deux arbres secondaires et deux pignons d'attaque (figure 10A), la position de ces derniers est déterminée par la proximité relative des deux arbres secondaires. Elle impose l'utilisation d'une grande couronne pour pouvoir à la fois engrener sur les pignons d'attaque et réaliser une démultiplication courte. Ces contraintes posent des problèmes d'implantation de la transmission dans le compartiment moteur, pour la sécurité des occupants en cas de crash et le positionnement de la couronne de direction notamment sur des petits véhicules. Conformément à l'invention (figure 10B), la transmission n'a qu'un seul arbre secondaire, 5 et le mouvement transitant par l'arbre 30 de transfert 6, est transmis au différentiel par celui-ci. Cette architecture permet de positionner une couronne de différentiel plus petite. Son masque est réduit. Elle s'intègre donc beaucoup plus facilement dans les petits véhicules.

Enfin, l'indépendance des changements de rapports en mode électrique et en mode thermique procure une grande flexibilité d'utilisation des rapports électriques et thermiques, si bien qu'on dispose toujours du meilleur compromis entre la demande en couple du conducteur, l'acoustique, et la consommation du véhicule.

## Revendications

1. Transmission hybride pour véhicule automobile muni d'un moteur thermique et d'au moins une machine électrique d'entraînement (2), deux arbres primaires (3, 4) coaxiaux dont l'un (4) est plein et l'autre (3) est creux, reliés au vilebrequin (1) du moteur thermique et à une machine électrique (2), un arbre secondaire (5) relié aux roues du véhicule par un différentiel (7), et un arbre de transfert (6) de mouvement d'un arbre primaire (3) sur l'arbre secondaire (5) et de couplage des arbres primaires (3, 4), dans laquelle la machine électrique (2) est disposée à la même extrémité des arbres primaires (4, 3) que le moteur thermique (1) et dans laquelle l'arbre primaire creux (3) porte une denture fixe (21), assurant le passage permanent du mouvement sur l'arbre de transfert (6), **caractérisée en ce que** les arbres primaires (4, 3) sont reliés au moteur thermique (1) et à la machine électrique (2) sans embrayage de coupure, et **en ce que** l'arbre primaire creux (3) porte deux pignons fixes (11, 13) de rapports électriques engrenant avec des pignons fous (10, 12) de l'arbre secondaire (5).

2. Transmission hybride selon la revendication 1, **caractérisée en ce que** l'arbre primaire plein (4) est relié au vilebrequin du moteur thermique (1), et l'arbre primaire creux (3) est relié à la machine électrique (2) et tourne autour de l'arbre primaire plein (4).

3. Transmission hybride selon la revendication 1 ou 2, **caractérisée en ce que** l'arbre secondaire (5) porte un pignon d'attaque de différentiel (22) situé dans le même plan transversal qu'un engrènement (20, 21) de l'arbre de transfert (6) sur l'arbre creux (3).

4. Transmission hybride selon la revendication 1, 2 ou 3, **caractérisée en ce que** l'arbre de transfert (6) porte une denture fixe (20) engrenant avec la denture fixe (21) de l'arbre primaire creux (3), et deux pignons fous (18, 19) engrenant respectivement avec deux pignons fixes (16, 14) de l'arbre primaire plein (4).

5. Transmission hybride selon l'une des revendications précédentes, **caractérisée en ce qu'**elle présente un premier dispositif de couplage (8) porté par l'arbre secondaire (5) permettant de coupler l'arbre primaire (4) relié au moteur thermique, avec l'arbre secondaire (5), sur deux rapports thermiques distincts.

6. Transmission hybride selon l'une des revendications précédentes, **caractérisée, en ce qu'**elle présente un deuxième dispositif de couplage (7) porté par l'arbre de transfert (6) permettant de coupler entre eux les deux arbres primaires (4, 3) avec deux rapports de démultiplication différents.

7. Transmission hybride selon l'une des revendications précédentes, **caractérisée en ce qu'**elle présente un troisième dispositif de couplage (9) sur l'arbre secondaire (5) permettant de coupler l'arbre primaire (3) relié à la machine électrique (2), avec l'arbre secondaire (5), sur deux rapports de démultiplication différents.

8. Transmission hybride selon l'une des revendications précédentes, **caractérisée en ce qu'**elle comprend une deuxième machine électrique (26), couplée à l'arbre de transfert (6).

9. Transmission hybride selon la revendication 8, **caractérisée en ce que** la deuxième machine électrique (26) comporte un pignon de sortie (25), entraînant un pignon intermédiaire de renvoi (24), sur un pignon de couplage (20) de l'arbre de transfert (6).

10. Transmission hybride selon les revendications 5, 6 et 7, **caractérisée en ce que** les deux coupleurs (8, 7), qui commandent la sortie de mouvement du moteur thermique sont de préférence équipés d'un actionneur de type passage-sélection, interdisant l'engagement simultané de deux rapports thermiques.

11. Procédé de commande des changements de rapports sur une transmission hybride pour véhicule automobile, selon la revendication 1, comportant trois dispositifs de couplage (8, 7, 9) agencés conformément aux revendications 5, 6 et 7, **caractérisé en ce que** les trois dispositifs de couplage (8, 7, 9) sont commandés par un groupe de passage électrique à trois positions, et par un groupe fonctionnel de passage thermique à cinq positions.

12. Procédé de commande de changements de rapports selon la revendication 11, **caractérisé en ce que** le groupe fonctionnel de passage est composé d'un dispositif de sélection de ligne et d'un actionneur de passage.

13. Procédé de commande de changements de rapports selon la revendication 12, **caractérisé en ce que** deux rapports thermiques ***(Ice3, Ice5)*** sont accessibles dans un mode de fonctionnement hybride parallèle, avec la deuxième machine électrique (26) seule, ou avec les deux machines électriques (2, 26), couplées sur l'un des deux rapports électriques (***ev1***, ***ev2***) de la transmission.

14. Procédé de commande de changements de rapports selon la revendication 11, 12, ou 13, **caractérisé en ce qu'**on réalise sous couple les changements de rapports électriques (***ev1***, ***ev2***) et (***ev2***, ***ev1***) en entraînant le moteur thermique (1) à vide.

15. Procédé de commande de changements de rapports selon la revendication 14, **caractérisé en ce que** les changements de rapport électrique (***ev1***, ***ev2***) s'effectuent de la façon suivante à partir de l'étape 1 :
a) synchronisation de la deuxième machine électrique (26) au régime du pignon fou (14) du deuxième rapport électrique (ev2), par l'intermédiaire du moteur thermique (1) sans injection de carburant, et crabotage de la deuxième machine électrique (26) (étape 2),
b) fourniture de couple par la deuxième machine électrique (26) et dé-crabotage du rapport (***ev1***) (étape 3),
c) synchronisation de la première machine électrique (2) et fourniture de couple par celle-ci sur le deuxième rapport (***ev2***) (étape 4), et
d) déconnexion de la deuxième machine électrique (26).

## Patentansprüche

1. Hybridgetriebe für ein Kraftfahrzeug, das über Folgendes verfügt: einen Verbrennungsmotor und mindestens eine elektrische Antriebsmaschine (2), zwei koaxiale primäre Wellen (3, 4), von denen eine (4) eine Vollwelle und die andere (3) eine Hohlwelle ist und die mit der Kurbelwelle (1) des Verbrennungsmotors und mit einer elektrischen Maschine (2) verbunden sind, eine sekundäre Welle (5), die über ein Differential (7) mit den Rädern des Fahrzeugs verbunden ist, und eine Welle zum Übertragen (6) von Bewegungen von einer primären Welle (3) auf die sekundäre Welle (5) und zum Koppeln der primären Wellen (3, 4), wobei die elektrische Maschine (2) an demselben Ende der primären Wellen (4, 3) wie der Verbrennungsmotor (1) angeordnet ist und wobei die primäre Hohlwelle (3) eine Festverzahnung (21) trägt, die den permanenten Übergang der Bewegung auf die Übertragungswelle (6) sicherstellt,
**dadurch gekennzeichnet, dass** die primären Wellen (4, 3) ohne Trennkupplung mit dem Verbrennungsmotor (1) und der elektrischen Maschine (2) verbunden sind und dass die primäre Hohlwelle (3) zwei Festräder (11, 13) für Elektrogänge trägt, die mit Losrädern (10, 12) der sekundären Welle (5) im Eingriff sind.

2. Hybridgetriebe nach Anspruch 1, **dadurch gekennzeichnet, dass** die primäre Vollwelle (4) mit der Kurbelwelle des Verbrennungsmotors (1) verbunden ist und die primäre Hohlwelle (3) mit der elektrischen Maschine (2) verbunden ist und sich um die primäre Vollwelle (4) dreht.

3. Hybridgetriebe nach Anspruch 1 oder 2, **dadurch gekennzeichnet, dass** die sekundäre Welle (5) ein Differential-Antriebsritzel (22) trägt, das sich in der gleichen Querebene wie eine Verzahnung (20, 21) der Übertragungswelle (6) mit der Hohlwelle (3) befindet.

4. Hybridgetriebe nach Anspruch 1, 2 oder 3, **dadurch gekennzeichnet, dass** die Übertragungswelle (6) eine Festverzahnung (20), die mit der Festverzahnung (21) der primären Hohlwelle (3) im Eingriff ist, und zwei Losräder (18, 19), die jeweils mit zwei Festrädern (16, 14) der primären Vollwelle (4) im Eingriff sind, trägt.

5. Hybridgetriebe nach einem der vorhergehenden Ansprüche, **dadurch gekennzeichnet, dass** es eine erste Kopplungsvorrichtung (8) aufweist, die von der sekundären Welle (5) getragen wird und es gestattet, die primäre Welle (4), die mit dem Verbrennungsmotor verbunden ist, in zwei verschiedenen Verbrennergängen mit der sekundären Welle (5) zu koppeln.

6. Hybridgetriebe nach einem der vorhergehenden Ansprüche, **dadurch gekennzeichnet, dass** es eine zweite Kopplungsvorrichtung (7) aufweist, die von der Übertragungswelle (6) getragen wird und es gestattet, die zwei primären Wellen (4, 3) mit zwei unterschiedlichen Übersetzungsverhältnissen miteinander zu koppeln.

7. Hybridgetriebe nach einem der vorhergehenden Ansprüche, **dadurch gekennzeichnet, dass** es eine dritte Kopplungsvorrichtung (9) an der sekundären Welle (5) aufweist, die es gestattet, die primäre Welle (3), die mit der elektrischen Maschine (2) verbunden ist, mit zwei unterschiedlichen Übersetzungsverhältnissen mit der sekundären Welle (5) zu koppeln.

8. Hybridgetriebe nach einem der vorhergehenden Ansprüche, **dadurch gekennzeichnet, dass** es eine zweite elektrische Maschine (26) beinhaltet, die mit der Übertragungswelle (6) gekoppelt ist.

9. Hybridgetriebe nach Anspruch 8, **dadurch gekennzeichnet, dass** die zweite elektrische Maschine (26) ein Abgangsrad (25) umfasst, das über ein Vorlegezwischenrad (24) ein Kopplungsrad (20) der Übertragungswelle (6) antreibt.

10. Hybridgetriebe nach den Ansprüchen 5, 6 und 7, **dadurch gekennzeichnet, dass** die zwei Koppeleinheiten (8, 7), die den Abgang von Bewegungen des Verbrennungsmotors steuern, vorzugsweise mit einem Aktor vom Typ Schalten-Auswählen ausgerüstet sind, welcher den simultanen Eingriff von zwei Verbrennergängen verhindert.

11. Verfahren zur Gangschaltungssteuerung bei einem Hybridgetriebe für ein Kraftfahrzeug nach Anspruch 1, umfassend drei Kopplungsvorrichtungen (8, 7, 9), die gemäß den Ansprüchen 5, 6 und 7 angeordnet sind, **dadurch gekennzeichnet, dass** die drei Kopplungsvorrichtungen (8, 7, 9) durch eine Elektroschaltungsgruppe mit drei Positionen und durch eine Verbrennerschaltungsfunktionsgruppe mit fünf Positionen gesteuert werden.

12. Verfahren zur Gangschaltungssteuerung nach Anspruch 11, **dadurch gekennzeichnet, dass** die Schaltungsfunktionsgruppe aus einer Strangauswahlvorrichtung und einem Schaltaktor gebildet ist.

13. Verfahren zur Gangschaltungssteuerung nach Anspruch 12, **dadurch gekennzeichnet, dass** zwei Verbrennergänge (***Ice3, Ice5***) in einem Parallelhybridbetriebsmodus verfügbar sind, wobei nur die zweite elektrische Maschine (26) oder beide elektrischen Maschinen (2, 26) mit einem der zwei Elektrogänge (***ev1, ev2***) des Getriebes gekoppelt sind.

14. Verfahren zur Gangschaltungssteuerung nach Anspruch 11, 12 oder 13, **dadurch gekennzeichnet, dass** die Schaltung von Elektrogängen (***ev1, ev2***) und (***ev2, ev1***) unter Last erfolgt und der Verbrennungsmotor (1) dabei im Leerlauf angetrieben wird.

15. Verfahren zur Gangschaltungssteuerung nach Anspruch 14, **dadurch gekennzeichnet, dass** die Schaltung eines Elektroganges (***ev1, ev2***) auf die folgende Weise ab Schritt 1 erfolgt:
a) Synchronisieren der zweiten elektrischen Maschine (26) mit dem Betriebszustand des Losrades (14) des zweiten Elektroganges (***ev2***) mit Hilfe des Verbrennungsmotors (1) ohne Einspritzung von Kraftstoff und Einrücken der zweiten elektrischen Maschine (26)(Schritt 2),
b) Bereitstellen eines Drehmoments durch die zweite elektrische Maschine (26) und Ausrücken des Ganges (***ev1***) (Schritt 3),
c) Synchronisieren der ersten elektrischen Maschine (2) und Bereitstellen eines Drehmoments durch diese in dem zweiten Gang (***ev2***) (Schritt 4) und
d) Trennen der zweiten elektrischen Maschine (26).

## Claims

1. Hybrid transmission for a motor vehicle provided with an internal combustion engine and at least one driving electric machine (2), two coaxial primary shafts (3, 4), one (4) of which is solid and the other (3) of which is hollow, connected to the crankshaft (1) of the internal combustion engine and to an electric machine (2), a secondary shaft (5) connected to the wheels of the vehicle via a differential (7), and a shaft (6) for transferring movement from a primary shaft (3) to the secondary shaft (5) and coupling the primary shafts (3, 4), wherein the electric machine (2) is disposed at the same end of the primary shafts (4, 3) as the internal combustion engine (1) and wherein the hollow primary shaft (3) carries fixed teeth (21) for the continuous transfer of the movement to the transfer shaft (6), **characterized in that** the primary shafts (4, 3) are connected to the internal combustion engine (1) and to the electric machine (2) without a disconnect clutch, and **in that** the hollow primary shaft (3) carries two electrical ratio fixed gears (11, 13) meshing with idler gears (10, 12) of the secondary shaft (5).

2. Hybrid transmission according to Claim 1, **characterized in that** the solid primary shaft (4) is connected to the crankshaft of the internal combustion engine (1), and the hollow primary shaft (3) is connected to the electric machine (2) and turns around the solid primary shaft (4).

3. Hybrid transmission according to Claim 1 or 2, **characterized in that** the secondary shaft (5) carries a differential drive gear (22) situated in the same transverse plane as a meshing (20, 21) of the transfer shaft (6) with the hollow shaft (3).

4. Hybrid transmission according to Claim 1, 2 or 3, **characterized in that** the transfer shaft (6) carries fixed teeth (20) meshing with the fixed teeth (21) of the hollow primary shaft (3), and two idler gears (18, 19) respectively meshing with two fixed gears (16, 14) of the solid primary shaft (4).

5. Hybrid transmission according to one of the preceding claims, **characterized in that** it includes a first coupling device (8) carried by the secondary shaft (5) for coupling the primary shaft (4) connected to the internal combustion engine with the secondary shaft (5) at two distinct internal combustion ratios.

6. Hybrid transmission according to one of the preceding claims, **characterized in that** it includes a second coupling device (7) carried by the transfer shaft (6) for coupling the two primary shafts (4, 3) together with two different demultiplication ratios.

7. Hybrid transmission according to one of the preceding claims, **characterized in that** it includes a third coupling device (9) on the secondary shaft (5) for coupling the primary shaft (3) connected to the electric machine (2) with the secondary shaft (5) at two different demultiplication ratios.

8. Hybrid transmission according to one of the preceding claims, **characterized in that** it comprises a second electric machine (26) coupled to the transfer shaft (6).

9. Hybrid transmission according to Claim 8, **characterized in that** the second electric machine (26) comprises an output gear (25), driving an intermediate idler gear (24), on a coupling gear (20) of the transfer shaft (6).

10. Hybrid transmission according to Claims 5, 6 and 7, **characterized in that** the two couplers (8, 7) that control the motion output of the internal combustion engine are preferably equipped with a change-selection type actuator preventing the simultaneous engagement of two internal combustion ratios.

11. Method of controlling changes of ratios on a hybrid transmission for a motor vehicle, according to Claim 1, comprising three coupling devices (8, 7, 9) arranged according to Claims 5, 6 and 7, **characterized in that** the three coupling devices (8, 7, 9) are controlled by a three-position electrical change set and by a fiveposition internal combustion change functional set.

12. Method of controlling changes of ratios according to Claim 11, **characterized in that** the change functional set is composed of a line selection device and of a change actuator.

13. Method of controlling changes of ratios according to Claim 12, **characterized in that** two internal combustion ratios (***Ice3, Ice5***) are accessible in a parallel hybrid operating mode with the second electric machine (26) only or with the two electric machines (2, 26) coupled at one of the two electric ratios (***ev1, ev2*)** of the transmission.

14. Method of controlling changes of ratios according to Claim 11, 12 or 13, **characterized in that** the changes of electric ratios (***ev1**, **ev2***) and (***ev2**, **ev1***) are effected under torque by driving the internal combustion engine (1) with no load.

15. Method of controlling changes of ratios according to Claim 14, **characterized in that** the changes of electric ratio (***ev1*, *ev2)*** are effected in the following manner starting from step 1:
a) synchronization of the second electric machine (26) to the speed of the idler gear (14) of the second electric ratio (***ev2***) via the internal combustion engine (1) with no injection of fuel and engaging the second electric machine (26) (step 2),
b) supply of torque by the second electric machine (26) and disengagement of the ratio (***ev1***) (step 3),
c) synchronization of the first electric machine (2) and supply of torque by the latter at the second ratio (***ev2***) (step 4), and
d) disconnection of the second electric machine (26) .
